Europäisches Patentamt

(19) European Patent Office

Office européen des brevets

(11) Publication number: **0 247 505 B1**

(12) **EUROPEAN PATENT SPECIFICATION**

(45) Date of publication of patent specification :
16.10.91 Bulletin 91/42

(51) Int. Cl.⁵ : **C02F 3/08**

(21) Application number : **87107305.2**

(22) Date of filing : **19.05.87**

(54) **Air-driven contact filter.**

The file contains technical information
submitted after the application was filed and
not included in this specification

(30) Priority : **26.05.86 DK 2444/86**

(43) Date of publication of application :
**02.12.87 Bulletin 87/49**

(45) Publication of the grant of the patent :
**16.10.91 Bulletin 91/42**

(84) Designated Contracting States :
**AT BE CH DE ES FR GB IT LI NL SE**

(56) References cited :
**DE-A- 3 409 111**
**GB-A- 1 509 712**
**US-A- 4 115 268**
**US-A- 4 330 408**

(73) Proprietor : **Frandsen, Aksel Sondergard**
**Sellerup Strandvej 7, Brejning Strand**
**DK-7080 Borkop (DK)**

(72) Inventor : **Frandsen, Aksel Sondergard**
**Sellerup Strandvej 7, Brejning Strand**
**DK-7080 Borkop (DK)**

(74) Representative : **Koepsell, Helmut, Dipl.-Ing.**
**Mittelstrasse 7**
**W-5000 Köln 1 (DE)**

Note : Within nine months from the publication of the mention of the grant of the European patent, any
person may give notice to the European Patent Office of opposition to the European patent granted.
Notice of opposition shall be filed in a written reasoned statement. It shall not be deemed to have been
filed until the opposition fee has been paid (Art. 99(1) European patent convention).

EP 0 247 505 B1

## Description

The present invention relates to an air-driven contact-filter designed for use in a system for biological cleaning of waste water and of the kind referred to in the opening part of claim 1.

To avoid use of gear and/or other mechanical transmissions it has been proposed to provide the rotor with vanes on the periphery and to injet air under the rotor slightly off-centre so that the-air is caught by the vanes at one side, thus causing the rotor to rotate( US-A-4,351,721).

Air injected in this way apparently yields work/torque during half a rotor revolution, but in practice the torque is only present over a rather short angle of rotation, viz. in the part of the angle of rotation where the upward force is offset most relatively to a vertical line through the centre.

In order to utilize the torque resulting from this rather short distance, the rotor has to be submerged almost completely. Therefore the typical counter-pressure against injected air is at least two thirds of the rotor diameter, i.e. fans are required which have an energy waste relative to this counter-pressure.

According to the present invention the contact filter is designed as indicated in claim 1.

The air-driven filter according to the invention differs from the prior art apparatus in that rotation is effected by weight transfer by displacing the water content in the submerged part of spiral channels composing the rotor by injection of air so that their weight is mainly at one side of the rotor and the injected air creates a lift at the other side of the rotor.

Further, the invention differs from the prior art apparatus in that the counter-pressure is considerably lower. Effective utilization of the injected air is obtained at a counter-pressure of only 25 cm $H_2O$ even if the rotor diameter is upwards of 3 metres.

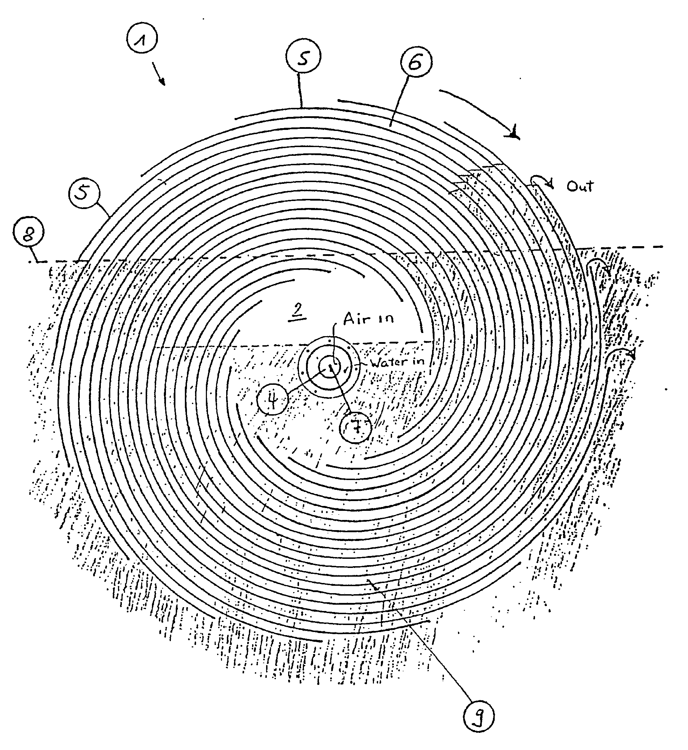

In the following the invention will be explained in more detail in connection with the drawing which schematically shows a section perpendicular to the axis of rotation 7 through a rotor 1 of a contact filter according to the invention.

On a horizontally rotatably placed centre pipe 4 at least two circular gable plates are placed. Near the centre pipe these circular gable plates are provided with openings to a mixing chamber 2 surrounding the centre pipe 4.

Between two adjoining circular gable plates a number of spiral guiding plates 5 extend in radial direction from the mixing chamber 2 to the periphery of the circular gable plates thus forming a rotor with spiral channels 6 which are rotatable around the axis of the centre pipe.

The centre pipe 4 is closed at one end, whereas the other end has an inlet stub for connection with a compressed air source. In the mantle surface of the centre pipe 4 there are piercings (not shown) which are placed and dimensioned such that air let in at the inlet stub leaves the pipe evenly in radial direction.

The described contact filter is placed with the axis of rotation 7 somewhat below the water surface 8 as shown in the drawing, and air is ted into the centre pipe. Through the openings in the circular gable plates water pours into the mixing chamber 2 and the by then submerged parts 9 of the spiral channels 6.

The fed air will displace the water content in the submerged part of the channels, so that the weight mainly is at one side of the rotor (right side on the drawing) and the air gives a lift at in the other side. The rotor 1 will therefore revolve clockwise with respect to the drawing caused by the weight transfer effected by the induced air.

When the inner diameter of the centre pipe is e.g. 10 cm and its axis is submerged 30 cm the counter-pressure against the induced air is 25 cm $H_2O$. A contactfilter for 1000 person equivalents (PE) only requires 7,5 m$^3$ air per minute. With a standard fan with a max. pressure of 30 cm $H_2O$ the operation costs 0,75kW per hour. With presupposed perpetual operation the consumption of electricity is less than 7kW/PE/year.

In a contact-filter with several circular gable plates mounted on a centre pipe,.e.g. at intervals of 10 cm, which circular gable plates two by two delimit spiral channels 6 mounted next to each other, the possibility of supply of water sets limits to the axial extension of the filter. For that reason it is suggested that e.g. every 5 of the spiral wound channels are wounded opposite to the others so that this instead of leading water from the mixing chamber 2 to the periphery of the rotor leads water (and air) from the periphery into the mixing chamber. With such counter directed channels the rotor can have any axial extension.

## Claims

1. Air-driven contact filter designed for use in a system for biological cleaning of waste water comprising a rotor (1) which is rotatable around a horizontal axis (7) characterized in that a mixing chamber (2) surrounds a centre pipe (4) including said axis (7) which centre pipe is closed at one end and is provided with piercings in its surface such that air let in at the other end leaves the pipe in substantially radial direction into said mixing chamber (2), and that said rotor comprises at least one spiral channel (6) formed by means of spiral guiding plates extending from said mixing chamber (2) to the periphery of two circular gable plates, said spiral channel also extending between said two circular gable plates which are disposed on said axis (7) and are provided with openings so that waste water flows into said mixing chamber (2).

2. Contact filter according to claim 1 characterized in that a plurality of said rotors are mounted on the same centre pipe between two respective circular gable plates, the spiral channels of at least one rotor, e.g. every 5, having a direction reversed with respect to the spiral channels of the other rotors so that the rotor comprising channels with reversed direction leads water from the periphery into the mixing chamber.

**Patentansprüche**

1. Luftgetriebenes Kontaktfilter zu Verwendung in einem System zum biologischen Reinigen von Abwasser mit einem Rotor (1), der um eine horizontale Achse (7) rotierbar ist, dadurch gekennzeichnet, daß eine Mischkammer (2) ein Zentralrohr (4) umgibt, welches die Achse (7) einschließt, wobei das Zentralrohr an einem Ende verschlossen und an seiner Oberfläche mit Durchbrechungen versehen ist derart, daß Luft, die am anderen Ende eingelassen wird, aus dem Rohr in im wesentlichen radialer Richtung in die Mischkammer (2) strömt, und daß der Rotor wenigstens einen Spiralkanal (6) aufweist, der durch spiralförmige Führungsplatten gebildet wird, die sich von der Mischkammer (2) zum Umfang von zwei kreisförmigen Stirnplatten erstrecken, und der Spiralkanal sich auch zwischen den beiden kreisförmigen Stirnplatten erstreckt, die auf der Achse (7) angeordnet und mit Öffnungen versehen sind, so daß Abwasser in die Mischkammer (2) fließt.

2. Kontaktfilter nach Anspruch 1, dadurch gekennzeichnet, daß mehrere dieser Rotoren auf demselben Zentralrohr zwischen jeweils zwei kreisförmigen Stirnplatten angeordnet sind und die Spiralkanäle wenigstens eines Rotors, z. B. jedes fünften Rotors, eine Richtung aufweisen, die in bezug auf die Spiralkanäle der anderen Rotoren entgegengesetzt verläuft, so daß der Rotor mit entgegengerichteten Kanälen Wasser vom Umfang in die Mischkammer leitet.

**Revendications**

1. Filtre de contact actionné par l'air, destiné à être utilisé dans un système d'épuration biologique d'eau usée, comportant un rotor (1) qui peut tourner autour d'un axe horizontal (7), caractérisé en ce qu'il comporte une chambre de mélange (2) entourant un tube central (4) qui contient l'axe (7) et qui est fermé à une extrémité, et dont la surface est percée de trous pour que l'air introduit par l'autre extrémité sorte du tube dans une direction sensiblement radiale pour pénétrer dans la chambre de mélange (2), et en ce que le rotor comporte au moins un canal en spirale (6) formé par des plaques de guidage en spirale allant de la chambre de mélange (2) à la périphérie de deux plaques circulaires latérales, ce canal en spirale s'étendant aussi entre les deux plaques circulaires latérales qui sont disposées sur l'axe (7) et pourvues d'ouvertures pour permettre l'entrée de l'eau usée dans la chambre de mélange (2).

2. Filtre de contact actionné par l'air selon la revendication 1, caractérisé en ce qu'il comporte plusieurs rotors montés sur le même tube central et fonctionnant chacun entre deux plaques circulaires latérales correspondantes, au moins le canal en spirale (5) de l'un des rotors-ayant un sens d'enroulement opposé à celui des autres rotors, pour que chaque rotor pourvu d'un canal en sens inverse prenne l'eau en périphérie pour l'introduire dans la chambre de mélange.